# EUROPÄISCHE PATENTSCHRIFT

(11) **EP 1 224 071 B1**
(45) Veröffentlichungstag und Bekanntmachung des Hinweises auf die Patenterteilung: **06.08.2003**
(21) Anmeldenummer: 00979509.7
(22) Anmeldetag: 25.10.2000
(51) Int. Cl.: B29C 70/68, B29C 45/14, B32B 7/04, B32B 31/30

(54) **HINTERSPRITZUNG VON LEDER MIT THERMOPLASTEN**
BACKING LEATHER WITH THERMOPLASTICS BY INJECTION MOLDING
CUIR POURVU SUR SA PARTIE ARRIERE DE MATIERE THERMOPLASTIQUE MOULEE PAR INJECTION

(30) Priorität: 27.10.1999 DE 19951776
(43) Veröffentlichungstag der Anmeldung: 24.07.2002
(73) Patentinhaber: BASF AKTIENGESELLSCHAFT, 67056 Ludwigshafen (DE)
(72) Erfinder: HÜFFER, Stephan, 67063 Ludwigshafen (DE); RÖSCH, Joachim, 67063 Ludwigshafen (DE); IGL, Georg, 71554 Weissach (DE); BARTL, Jürgen, 67063 Ludwigshafen (DE); HOMES, Angelika, 64319 Pfungstadt (DE)
(86) Internationale Anmeldenummer: EP0010513
(87) Internationale Veröffentlichungsnummer: WO01030557

(56) Entgegenhaltungen:
- EP-A- 0 362 684
- EP-B- 0 199 708
- CH-A- 572 390
- DE-A- 4 224 474
- FR-A- 1 263 316
- US-A- 5 401 449
- US-A- 5 409 648
- US-A- 5 649 235
- US-A- 5 650 115
- ANDERS S ET AL: "HINTERSPRITZEN VON DEKORMATERIALIEN DURCH NIEDERDRUCK-SPRITZGIESSEN" KUNSTSTOFFE,DE,CARL HANSER VERLAG. MUNCHEN, Bd. 80, Nr. 9, 1. September 1990 (1990-09-01), Seiten 997-1002, XP000226449 ISSN: 0023-5563

## Beschreibung

Die Erfindung betrifft ein Verfahren zur Herstellung eines dreidimensionalen Formteils mit einem Träger aus einem thermoplastischen Polymeren und einer auf dem Träger angeordneten Schicht aus Leder sowie ein dreidimensionales Formteil mit einem Träger aus einem thermoplastischen Polymeren und einer auf dem Träger angeordneten Schicht aus Leder.

Bei Fahrzeugen der gehobenen Preiskategorie ist es zur Erzeugung eines exklusiven Eindrucks üblich, den Innenraum des Fahrzeugs mit Leder auszukleiden. Dazu werden bisher die bereits vorgeformten Formteile wie Türinnenverkleidungen, Armaturenbretter, Mittelkonsolen, Blenden oder Griffe mit entsprechend zugeschnittenen und gegebenenfalls vorgeformten Lederstrukturen beklebt. Insbesondere im Fall von nicht-planen Oberflächen muß das Leder in einem separaten Arbeitsgang entweder in Form genäht oder getrennt tiefgezogen werden. Eine solche Kaschierung von Formteilen ist nur schwer automatisierbar und wegen des hohen Anteils an Handarbeit daher sehr teuer. Die bisher üblichen Verkleidungsverfahren führen auch nur zu unbefriedigenden Ergebnissen. So müssen Emissionen von Lösemitteln und Restmonomeren aus den Klebstoffsystemen in Kauf genommen werden. Ferner sind insbesondere in Automobilen die Verkleidungen sehr extremen Temperaturen oder Feuchtigkeitsschwankungen ausgesetzt, so daß es durch Schwunderscheinungen zu Verwerfungen in der Lederverkleidung kommen kann. Ferner eignet sich für das bislang übliche Verkleidungsverfahren lediglich ausgewähltes Narbenleder erster Qualität.

In der DE-OS 21 44 371 wird ein Verfahren zur Prägekaschierung von Leder in einem HF-Feld beschrieben. Dabei wird die dauerhafte Verbindung einer Leder- bzw. Trägerschicht mit PVC- oder PUR-Schichten unter Mitverwendung eines durch Wärme reaktivierbaren, gegebenenfalls treibmittelhaltigen Klebstoffes in einer Hochfrequenz-Presse unter gleichzeitiger Prägung im selben Arbeitsgang vorgenommen.

In der DE 197 52 058 wird ein Verfahren zum Hinterschäumen von eine Kappnaht aufweisenden Lederformstücken beschrieben. Dabei wird ein Lederformstück mit seiner Vorderseite auf die Formhälfte eines geeigneten Werkzeuges aufgelegt und danach in diesem auf die Rückseite des Lederformstückes das Kunststoff-Material unter zumindest geringfügiger Druckentwicklung aufgebracht. Erfindungsgemäß wird der im Bereich der Kappnaht zwischen dem obenliegenden Leder-Teilstück und dem untenliegenden Leder-Teilstück anzutreffende stufenartige Höhenunterschied durch ein zwischen die Leder-Vorderseite und die Werkzeug-Formhälfte eingelegtes Übergangsstück ausgeglichen. Über die Verfahrensbedingungen der Hinterspritzung des Leders mit dem Kunststoffmaterial werden keine näheren Angaben gemacht.

In der EP 0 337 183 B1 wird ein Verfahren zur Formgebung von Naturleder, insbesondere von Echtleder-Verkleidungen von Formteilen beschrieben. Dabei wird in die Unterseite des Leders eine Polyurethan-Sperrschicht eingepresst, welche durch Erwärmen reaktiviert wird. Viskosität und Menge der vor dem Pressvorgang auf die Unterseite aufgebrachten Polyurethan-Schicht werden so aufeinander abgestimmt, daß die Dicke der Sperrschicht 35 % bis 65 % der Dicke der Lederschicht beträgt. Im Anschluß an die Sperrschicht wird anschliessend ein Formteil hinterschäumt.

Es sind auch Versuche unternommen worden, Leder direkt mit Kunststoffen zu hinterspritzen. So berichten S. Anders et al., Kunststoffe 80 (1990), 997 - 1001, von Versuchen. Leder mit Kunststoffen zu hinterspritzen. In der EP 0 199 708 A2 wird ein Verfahren zur Herstellung wenigstens zweilagiger Gegenstände beschreiben. Dabei wird ein Lederstreifen in eine Spritzgießform eingelegt und mit einem thermoplastischen Kautschuk hinterspritzt. Die Temperatur des Kunststoffes im Schneckenvorraum beträgt etwa 250 °C, die Temperatur des Werkzeugs im Mittel 40 °C und der Einspritzdruck beträgt 100 bar.

Diese Versuche sind jedoch nur in kleinem Maßstab an Probestücken durchgeführt worden. Eine Umsetzung in die Großserienproduktion ist jedoch bisher gescheitert. Die Ursache hierfür liegt darin, daß bei den bisher bekannten Verfahren keine Lederoberfläche erhalten werden konnte, die ein zufriedenstellendes äußeres Erscheinungsbild zeigt. Die Oberflächen waren unregelmäßig, zeigten eine ungleichmäßige Farbe und wiesen Fehler, wie Risse oder Falten auf.

Ferner ist aus der EP-A-0 199 708 ein Verfahren mit den Merkmalen des Oberbegriffs des Anspruches 1 bekannt.

Aufgabe der Erfindung ist es, ein Verfahren zur Herstellung eines dreidimensionalen Formteils mit einem Träger aus einem thermoplastischen Polymeren und einer auf dem Träger angeordneten Schicht aus Leder zur Verfügung zu stellen, wobei das Verfahren einfach durchführbar sein sollte und die Herstellung des dreidimensionalen Formteils in nach Möglichkeit nur einem Herstellungsschritt ausführbar sein sollte.

Die Aufgabe wird durch das Verfahren gemäß unabhängigen Anspruch 1 gelöst.

Mit dem erfindungsgemässen Verfahren ist es möglich, in einem Arbeitsschritt das Formstück auszuformen und eine Verbindung zwischen dem Leder und dem thermoplastischen Polymeren herzustellen. Durch den hohen Druck und die hohe Temperatur wird eine intensive Verbindung zwischen Leder und thermoplastischem Polymeren hergestellt. Es wird angenommen, daß das Polymere in das Leder eindringt und so eine irreversible Verbindung herstellt. Die Verwendung eines Klebstoffs ist nicht erforderlich. Es entfällt damit der Arbeitsschritt, in dem der Klebstoff auf das Leder bzw. den Träger aufgebracht wird. Somit werden Emissionen von Lösungsmitteln oder Restmonomeren aus dem Klebstoff vollständig vermieden. Das Leder und der Träger aus thermoplastischem Polymeren werden über die gesamte Kontaktfläche miteinander verbunden. Die Verbindung zwischen Leder und thermoplastischem Polymeren ist dabei so intensiv, daß beim Versuch, die Lederschicht vom Träger abzulösen, die Struktur des Leders zerstört wird. Auch bei intensiven Temperaturbelastungen, wie sie beispielsweise in südlichen Ländern auf dem Armaturenbrett hinter der Windschutzscheibe auftreten, werden keine Verspannungen erzeugt, die zu einer Zerstörung des Formteils führen. Vielmehr wird die Schrumpfung des Leders vollständig vom Träger aufgefangen. Mit dem erfindungsgemäßen Verfahren ist auch die Kaschierung schwierig gestalteter Formstücke dauerhaft möglich. So können beispielsweise lederverkleidete Rückenlehnen von Stühlen hergestellt werden, wobei auch bei längerem Gebrauch auf der konkaven Seite der Lehne keine Ablösungen der Lederschicht vom Träger beobachtet werden.

Durch die sorgfältige Überwachung der Temperatur der am Leder anliegenden Formfläche des Werkzeugs wird ein optisch einwandfreies Erscheinungsbild der Lederoberfläche gewährleistet. Es wurde gefunden, daß bei Temperaturen oberhalb von 40 °C eine Ausbildung von Schwitzflecken auf der Lederoberfläche vermieden wird. Zwar erstarrt der eingespritzte Kunststoff rasch, wenn die Temperatur der temperierten Werkzeugformfläche möglichst niedrig gewählt wird und erlaubt damit kurze Taktzeiten da daß fertige Formteil sehr rasch aus dem Werkzeug entnommen erden kann, gleichzeitig muß der Kunststoff jedoch mit sehr hohem Druck eingespritzt werden, um den Hohlraum des Werkzeugs vor dem Erstarren des Kunststoffs vollständig ausfüllen zu können. Wird die Temperatur der temperierten Formfläche des Werkzeugs unterhalb von 40 °C gewählt, tritt als Schwierigkeit auf, daß das Leder sehr hohen mechanischen Belastungen ausgesetzt wird, die zu Verformungen oder Rißbildungen führen können. Durch die Temperierung der Formfläche wird der eingespritzt e Kunststoff rasch abgekühlt, wodurch sich seine Viskosität rasch erhöht. Dadurch wirken im fließenden Kunststoff sehr hohe Scherkräfte, die auf das Leder übertragen werden. An der Grenzfläche zwischen Kunststoff und Leder verfestigt sich der eingespritzte Kunststoff zuerst und sorgt dadurch für eine Einleitung der Kraft in die Lederstruktur. Die im Kunststoff wirkenden Scherkräfte bewirken daher eine Belastung des Leders auf Zug, wobei die Kräfte parallel zur Oberfläche in Richtung des fließenden Kunststoffs wirken. Dadurch reißt die Lederstruktur auf und es bilden sich Unregelmäßigkeiten bzw. Risse auf der Oberfläche des Leders aus, was zu einem nicht akzeptablen Erscheinungsbild führt. Die Temperatur der temperierten Formfläche des Werkzeugs muß daher oberhalb einer Temperatur von 40 °C gehalten werden. Bevorzugt wird die Temperatur oberhalb von 50 °C gehalten.

Wird die temperierte Formfläche des Werkzeugs auf eine Temperatur von mehr als 80 °C temperiert, nimmt die thermische Belastung des Leders stark zu, so daß eine zunehmende Zerstörung der Lederstruktur zu beobachten ist, was zu nicht akzeptablen Einbußen bei der Qualität des erzeugten Formteils führt. Außerdem erhöhen sich die Taktzeiten bei der Herstellung der Formteile deutlich, da der Kunststoff wegen der geringeren Temperaturdifferenz zwischen eingespritztem Kunststoff und temperierter Formfläche mit geringerer Geschwindigkeit verfestigt wird.

Insbesondere wenn die Temperatur der temperierten Formfläche des Werkzeugs im Bereich von 50 - 60 °C gehalten wird, ist ein Hochdruckhinterspritzen bei hohen Temperaturen, beispielsweise bei einer Temperatur von mehr als 100 °C, vorzugsweise im Bereich von 180 - 280 °C, insbesondere bevorzugt im Bereich von 200 bis 250 °C möglich, ohne daß das Leder, auch nicht im Dauerbetrieb, in Mitleidenschaft gezogen wird. Die Temperierungszeiten können dabei im Bereich von Minuten liegen, so daß auch Dünnwandspritzgußanwendungen in Betracht kommen.

Zur Vermeidung von Faltenbildung kann insbesondere bei der Herstellung von großflächigen Bauteilen ein Spritzgussverfahren mit einer Kaskadensteuerung zur Anwendung gelangen. Dabei wird der Kunststoff durch mehrere, in Fließrichtung des Kunststoffs hintereinander angeordnete Düsen eingespritzt. Die Steuerung der Einspritzung des Kunststoffs erfolgt dabei in der Weise, daß der Kunststoff erst zu dem Zeitpunkt durch eine Düse eingespritzt wird, wenn die Düse durch den Kunststoff, der aus der in Fließrichtung des eingespritzten Kunststoffs davor angeordneten Düse eingespritzt wurde, überdeckt ist. Die Einspritzung des Kunststoffs erfolgt also zeitlich versetzt, wobei die Einspritzung durch die den Rändern des Formteils am nächsten gelegenen Düsen zuletzt erfolgt. Durch die Überdeckung der Düse mit Kunststoff aus einer in Fließrichtung des Kunststoffs davor angeordneten Düse wird eine Faltenbildung vermieden. Da die Einspritzung des Kunststoffs in mehreren Abschnitten erfolgt, legt dieser vor dem Erstarren nur eine geringe Wegstrecke zurück, wodurch auch die mechanische Belastung des Leders geringer wird und keine Risse auf der Lederoberfläche entstehen.

Ein weiterer Vorteil besteht darin, daß das thermoplastische Polymere beim Abkühlen geringfügig schrumpft. Die Lederschicht wird daher geringfügig gestaucht und steht unter einer entsprechenden Druckspannung. Wird die Lederschicht, beispielsweise durch Einschnitte verletzt, klaffen die Schnittflächen nicht auseinander. Die Schnittkanten werden durch die Druckspannung der Lederschicht zusammengepresst, so daß keine Verschlechterung des optischen Erscheinungsbildes auftritt.

Auch bei der Einwirkung von Feuchtigkeit zeigen nach dem erfindungsgemäßen Verfahren hergestellte Formstücke keine wesentliche Veränderung. Dies ist von besonderem Vorteil bei Kabriolets. Hier kann eine Zerstörung der Lederverkleidung durch unbeabsichtigte Feuchtigkeitseinwirkung, beispielsweise durch Regen, weitgehend oder sogar vollständig vermieden werden.

Für das erfindungsgemäße Verfahren sind alle gebräuchlichen Ledersorten verwendbar. Durch die Temperierung der Formfläche des Werkzeugs wird eine Überhitzung und Zerstörung der Lederstruktur durch das mit hohem Druck bei hoher Temperatur aufgetragene thermoplastische Polymere wirksam vermieden. Es können sowohl Chromleder verarbeitet werden, die eine hydrothermale Stabilität von ungefähr 100 °C aufweisen wie auch andere Leder, die eine hydrothermale Stabilität von ungefähr 70 °C aufweisen. Beispiele für derartige Leder sind Vegetabilleder, Sämischleder sowie FOC (free of chrome)-Leder.

Für das Hinterspritzen von Leder eignen sich also prinzipiell metallsalzgegerbte (z.B. Chrom, Aluminium) als auch metallsalzfreie Leder. Aus Gründen des Umweltschutzes und der Möglichkeit, gebrauchte Leder wieder aufarbeiten zu können, sind metallsalzfreie Leder bevorzugt. Die Herstellung solcher Leder wird z.B. in "Das Leder", Jahrgang 43 (1992), Seite 283 ff. ausführlich beschrieben.

Bei der Lederherstellung sind sowohl im Wet-End- als auch im Finish-Prozess Prozesschemikalien und Farbstoffe auszuwählen, die sowohl dem Druck wie auch den thermischen Bedingungen des Hinterspritzvorgangs standhalten. Vor allem die im Wet-End Bereich zum Einsatz kommenden Fettungsmittel müssen im Kollagengeflecht gut fixiert sein, so daß bei Hinterspritzvorgang keine Fettmigration an die Oberfläche oder in den Kunststoff eintritt. Es kommt sonst zu unerwünschten Glanzstellen und Fettverunreinigungen an der Oberfläche des Formteils bzw. zu einer Beeinträchtigung der Haftung zwischen Leder und Kunststoff. Die zum Einsatz kommenden Gerbstoffe in der Vor- und Nachgerbung müssen so gewählt sein, daß eine gute Faserseparierung erfolgt und die Leder eine gute Licht-, Wärme- und Hitzebeständigkeit aufweisen. Dies ist vor allem mit Glutardialdehyd in Kombination mit synthetischen Gerbstoffen auf Basis von Dihydroxydiphenylsulfon zu erreichen. Unabhängig vom gewählten Gerbstoff muß nach dem Wet-End-Prozeß in jedem Fall eine ausreichend hohe Schrumpungstemperatur von mindestens 70 °C im nassen Zustand erreicht werden.

Beim Finish-Prozess müssen ebenfalls Produkte zum Einsatz gelangen, die den spezifischen Belastungen in Bezug auf Temperatur und Druck beim Hinterspritzen standhalten.

Die Dicke des verwendeten Leders ist abhängig von der Form und Anwendung des Lederbauteils und kann zwischen 0,8 und 1,6 mm variieren, wobei in der Regel eine Dicke zwischen 1,2 und 1,4 mm den meisten Anforderungen genügt.

Der Druck, mit dem die Verbindung zwischen Lederschicht und thermoplastischem Polymeren hergestellt wird, ist in seiner Höhe an sich nur durch die technischen Randbedingungen des verwendeten Werkzeuges beschränkt. Eine dauerhafte Verbindung zwischen Leder und thermoplastischem Polymeren wird bereits ab Drücken von 50 bar erreicht. Sehr gute Ergebnisse werden bei Drücken von mehr als 100 bar, insbesondere mehr als 180 bar erzielt. Bei sehr großen Werkstücken, beispielsweise Armaturenbrettern, wird auch mit wesentlich höheren Drücken, beispielsweise 1000 bar gearbeitet. Der Druck muß ausreichend sein um ein Eindringen des Kunststoffs in das Leder zu ermöglichen, so daß eine ausreichende Haftung zwischen Kunststoff und Leder erreicht wird. Der Einspritzdruck ist stark von der Größe und der Gestalt des Formteils bzw. der Kavität des Werkzeugs abhängig. Um eine ausreichende Haftung zu erreichen ist ein minimaler Werkzeuginnendruck, gemessen in der Nähe des Angusses von mindestens 50 bar, vorzugsweise mindestens 100 bar, insbesondere mehr als 180 bar erforderlich. Die Verarbeitungstemperatur wird in Abhängigkeit vom eingesetzten Kunststoff gewählt. Vorteilhaft für eine gute Verbindung zwischen Leder und thermoplastischem Kunststoff ist eine hohe Fließfähigkeit des Thermoplasten. Günstig wird die Schmelzflußrate (MFR) 230/2,16 > 5 g/10 min, vorzugsweise zwischen 10 bis 50 g/10 min, gewählt. Die Schmelzflußrate (MFR) wird nach ISO 1133 bei 230 °C und unter einem Gewicht von 2,16 kg bestimmt. Ebenso ist ein geringer Gehalt des Polymeren an Netzmitteln wie Glycerinmonostearat für eine gute Haftung vorteilhaft. Als günstig haben sich Gehalte von weniger als 5000 ppm Netzmittel herausgestellt.

Als thermoplastische Monomere, die den Träger bilden, kommen unter anderem Polypropylen, Polyethylen, Polyvinylchlorid, Polysulfone, Polyetherketone, Polyester, Polycycloolefine, Polyacrylate und Polymethacrylate, Polyamide, Polycarbonate, Polyurethane, Polyacetale wie z.B. Polyoxymethylen, Polybutylenterephthalate und Polystyrole in Betracht. Dabei sind sowohl Homopolymere als auch Copolymere dieser thermoplastischen Polymere verwendbar. Besonders geeignet sind Acrylnitril/Butadien/Styrol (ABS)-Polymere, auch als Mischungen von ABS-Polymeren, Acrylnitril/Styrol/Acrylester-Polymere,Styrol/Acrylnitril-Copolymere, Methylmethacrylat/Acrylnitril/Butadien/Styrol-Polymere, Styrol/ Butadien-Polymere sowie Mischungen unterschiedlicher Styrol/Butadien-Polymerer, Styrol/Butadien-Blockcopolymere sowie Vinylchlorid/Acrylat-Pfropfcopolymere. Vorzugsweise besteht der Träger aus Polypropylen, Polyamiden, Polybutylenterephthalat, thermoplastischen Urethanen, Polyethylen oder aus Copolymeren des Styrols mit untergeordneten Anteilen an einem oder mehreren Comonomeren wie z.B. Butadien, α-Methylstyrol, Acrylnitril, Vinylcarbazol sowie Estern der Acryl-, Methacryl- oder Itaconsäure, insbesondere Acrylnitril/ Butadien/Styrol-Polymeren und deren Mischungen. Weiter kommen PBT/ASA-, PC/ASA- und PC/ABS-Blends sowie Polyphenylenether und PPE/HIPS-Blends in Betracht. Die genannten Kunststoffe können auch faserverstärkt sein. Als Beispiel sei PBT/ASA-GF (Ultradur®) genannt. Der im erfindungsgemäßen Verfahren eingesetzte Träger kann auch Recyclate aus diesen thermoplastischen Polymeren enthalten.

Das bevorzugt verwendete Polybutylenterephthalat ist ein höhermolekulares Veresterungsprodukt von Terephthalsäure mit Butylenglycol und einer Schmelzflußrate (MFR) nach ISO 1133, bei 230 °C und unter einem Gewicht von 2.16 kg, von 5 bis 50 g/10 min, insbesondere von 5 bis 30 g/10 min.

Als Copolymere des Styrols kommen insbesondere Copolymere mit bis zu 45 Gew.-%, vorzugsweise mit bis zu 20 Gew.-% an einpolymerisiertem Acrylnitril in Betracht. Derartige Copolymere aus Styrol und Acrylnitril (SAN) weisen eine Schmelzflußrate (MFR), nach ISO 1133, bei 230 °C und unter einem Gewicht von 2,1 kg, von 1 bis 25 g/10 min, insbesondere von 4 bis 20 g/10 min auf.

Weitere ebenfalls bevorzugt eingesetzte Copolymere des Styrols enthalten bis zu 35 Gew.-%, insbesondere bis zu 20 Gew.-% einpolymerisiertes Acrylnitril, bis zu 35 Gew.-%. insbesondere bis zu 30 Gew.-% einpolymerisiertes Butadien. Die Schmelzflußrate derartiger Copolymere aus Styrol, Acrylnitril und Butadien (ABS), nach ISO 1133, bei 230 °C und unter einem Gewicht von 2,16 kg, im Bereich von 1 bis 40 g/10 min, insbesondere im Bereich von 2 bis 30 g/10 min.

Als Materialien für den Träger werden insbesondere auch Polyolefine wie Polyethylen oder Polypropylen eingesetzt, wobei letzteres bevorzugt verwendet wird. Unter der Bezeichnung "Polypropylen" sollen dabei sowohl Homo- als auch Copolymere des Propylens verstanden werden. Copolymere des Propylens enthalten in untergeordneten Mengen mit Propylen copolymerisierbare Monomere, beispielsweise C₂-C₈-Alk-1-ene wie unter anderem Ethylen, But-1-en, Pent-1-en oder Hex-1-en. Es können auch zwei oder mehrere verschiedene Comonomere verwendet werden.

Besonders geeignete Träger sind unter anderem Homopolymere des Propylens oder Copolymere des Propylens mit bis zu 50 Gew.-% einpolymersierter anderer Alk-1-ene mit bis zu 8 C-Atomen. Die Copolymere des Propylens sind hierbei statistische Copolymere oder Block- oder Impact-Copolymere. Sofern die Copolymere des Propylens statistisch aufgebaut sind, enthalten sie im allgemeinen bis zu 15 Gew.-%, bevorzugt bis zu 6 Gew.-% andere Alk-1-ene mit bis zu 8 C-Atomen, insbesondere Ethylen, But-1-en oder ein Gemisch aus Ethylen und But-1-en.

Block- oder Impact-Copolymere des Propylens sind Polymere, bei denen man in der ersten Stufe ein Propylen-Homopolymer oder ein statistisches Copolymer des Propylens mit bis zu 15 Gew.-%, bevorzugt bis zu 6 Gew.-% anderer Alk-1-ene mit bis zu 8 C-Atomen herstellt und dann in der zweiten Stufen ein Propylen-Ethylen-Copolymer mit Ethylengehalten von 15 bis 80 Gew.-%, wobei das Propylen-Ethylen-Copolymer zusätzlich noch weitere C₄-C₈-Alk-1-ene enthalten kann, hinzupolymerisiert. In der Regel wird soviel des Propylen-Ethylen-Copolymer hinzupolymerisiert, daß das in der zweiten Stufe erzeugte Copolymer im Endprodukt einen Anteil von 3 bis 60 Gew.-% aufweist.

Das Material des Trägers kann 1 bis 60, vorzugsweise 5 bis 50, besonders bevorzugt 10 bis 40 Gew.-%, bezogen auf das Gesamtgewicht des Trägers, an verstärkenden Füllstoffen enthalten wic z.B. Bariumsulfat, Magnesiumhydroxid, Talcum mit einer mittleren Korngrösse im Bereich von 0,1 bis 10 µm, gemessen nach DIN 66 115, Holz, Flachs, Kreide, Glasfaser, beschichtete Glasfasern, Lang- oder Kurzglasfasern, Glaskugeln oder Mischungen von diesen. Außerdem kann man dem Material des Trägers noch die üblichen Zusatzstoffe wie Licht, UV- und Wärmestabilisatoren, Ruße, Gleitmittel oder Flammschutzmittel und dergleichen in den üblichen und erforderlichen Mengen hinzufügen.

Leder kann als Naturstoff nicht mit beliebig hohen Temperaturen belastet werden, ohne daß ein Denaturieren der Lederstruktur auftritt. Gebräuchliche Chromleder zeigen eine hydrothermale Stabilität von 100 °C, während andere Leder eine hydrothermale Stabilität von 70 °C aufweisen. Durch die Temperierung der am Leder anliegenden Formfläche des Werkzeugs auf eine Temperatur von 40 bis 80 °C, vorzugsweise 50 bis 60 °C, wird ein Verkochen des Leders und eine Zerstörung der Lederstruktur beim Verbinden des Leders und des thermoplastischen Polymeren bei hohem Druck und hoher Temperatur wirksam vermieden. Die Lederseite des fertiggestellten Formstücks zeigt in seiner optischen Erscheinung keine Veränderung durch die Verbindung mit dem thermoplastischen Polymeren. Ebenso stimmt das beim Betasten des fertiggestellten Formteils vermittelte Gefühl der Lederoberfläche mit dem typischen Ledergefühl überein. Trotz der Anwendung hoher Temperaturen und hohen Drucks beim Verbinden von Lederschicht und thermoplastischem Polymeren zeigt die Lederseite des fertigen Formteils eine gewisse Nachgiebigkeit und Weichheit. Die Lederstruktur wird durch das erfindungsgemäße Verfahren nicht irreversibel zusammengepreßt und damit verhärtet.

Die Oberfläche der Lederseite des Formteils kann bei der Ausformung des Formteils im gleichen Arbeitsschritt in ihrer Gestaltung modifiziert werden, indem die am Leder anliegende Formfläche des Werkzeugs eine Prägestruktur aufweist. Die durch die Formfläche des Werkzeugs eingeformte Prägung oder Narbung steht irreversibel. Es ist daher beispielsweise sehr einfach möglich, in das Formteil das Emblem eines Herstellers einzuprägen. Bei einer Verarbeitung minderwertiger Leder können Lederfehler perforiert werden. Beim Verbinden von Lederschicht und thermoplastischem Polymeren werden Löcher im Leder durch die Polymerschmelze gefüllt und ausgeglichen. Das thermoplastische Polymere nimmt durch die Prägestruktur der Formfläche des Werkzeugs die exakt gleiche Oberflächenstruktur an wie die umgebende Lederoberfläche. Ein farblicher Ausgleich kann beispielsweise durch eine anschliessende Pigmentlackierung geschaffen werden.

Die Eigenschaften des Formteils lassen sich weiter modifizieren, indem das thermoplastische Polymere aufgeschäumt wird. Auf diese Weise lassen sich Gewichtseinsparungen verwirklichen, ohne daß Verluste bei der Stabilität des Formteils hingenommen werden müssen. Für die praktische Anwendung, beispielsweise für Türverkleidungen in Automobilen, Rückenlehnen und Sitzflächen von Stühlen sowie Hartschalenkoffer haben sich Gasgehalte als günstig erwiesen, die zu einer Reduktion des spezifischen Gewichts, bezogen auf das ungeschäumte thermoplastische Polymer von 5 bis 40 % führen. Die Porengröße und die Porengrößenverteilung können an sich beliebig gewählt werden. Ebenso können verschiedene Porenstrukturen verwendet werden. Es können offen- wie auch geschlossenporige Schäume verwendet werden. Das zum Aufschäumen verwendete Treibmittel ist an sich keinen besonderen Beschränkungen unterworfen. Es können endotherme Treibmittel wie Zitronensäure, Carbonate, Dicarbonate oder auch deren Mischungen verwendet werden, die unter Hitzeeinwirkung beim Hinterspritzen Gas freisetzen. Weitere geeignete Treibmittel sind Azodicarbonamid, Sulfohydrazide und Semicarbazide.

Kommerziell vertriebene Treibmittel sind zum Beispiel Hydrocerol® HK, Hydrocerol® CF 40S und Exocerol® OM 70A, die von Boehringer Ingelheim vertrieben werden, oder auch Luvopor® ABF/20 G-UT, Luvopor® HT-Pulver und Luvopor® VP 9060, die von Lehmann und Voss vertrieben werden. Ferner können auch physikalische Treibmittel wie Stickstoff oder Kohlendioxid verwendet werden, die beispielsweise im superkritischen Zustand eingesetzt werden. Ein besonders feinporiger Schaum mit einer engen Porenverteilung kann nach dem MuCell-Verfahren (Microcellular Foam) erhalten werden. Dieses Aufschäumverfahren ist beispielsweise in der WO 99/63019 beschrieben. Durch das Aufschäumen des Polymeren kann beispielsweise die Biegesteifigkeit des Formteils modifiziert werden. Bei der Korrektur von Lederfehlern durch Ausfüllen mit dem thermoplastischen Polymeren wird durch ein Aufschäumen des Polymeren ein Ausgleich der Elastizität zwischen der Lederschicht und dem Polymeren geschaffen. Die ausgebesserte Stelle ist in diesem Fall praktisch nicht mehr zu ertasten. Dies wird auch unterstützt durch die nicht oder nur in geringem Maße auftretende Schrumpfung des thermoplastischen Polymeren beim Abkühlen. An den ausgebesserten Stellen entstehen keine Vertiefungen. Nach einer entsprechenden Pigmentierung ist daher auch bei schrägem Lichteinfall die ausgebesserte Stelle gegenüber der umgebenden Lederoberfläche nicht mehr zu erkennen.

Der optische Eindruck einer ausgebesserten Fehlerstelle in der Lederoberfläche kann weiter verbessert werden, wenn das thermoplastische Polymere eingefärbt ist, vorzugsweise in seiner Färbung auf die Farbe des Leders abgestimmt ist. In Kombination mit einer leichten Pigmentlackierung ist der ausgebesserte Lederfehler nicht mehr zu erkennen.

Mit dem erfindungsgemäßen Verfahren ist auch eine Verarbeitung minderwertiger Leder möglich, ohne daß eine Einbuße in der optischen Erscheinung oder der Eigenschaften beim Betasten hingenommen werden muß. Durch das erfindungsgemäße Verfahren können daher beispielsweise auch bei Kraftfahrzeugen im unteren Preissegment eine Innenausstattung mit Leder zu günstigen Preisen angeboten werden, wobei gleichzeitig ein höherwertiger Eindruck der Innenausstattung durch die Verkleidung mit Leder erreicht wird. Ein weiterer Vorteil ist, daß sich ein geringerer Lederverschnitt ergibt, da auch Bereiche des Leders mit geringerer Qualität verarbeitet werden können.

Durch die Kühlung der Formfläche des Werkzeugs ist die hydrothermale Belastung des Leders gering. Für eine Verarbeitung hat es sich als günstig erwiesen, wenn das Leder möglichst trocken ist. Bevorzugt weist das Leder einen Feuchtigkeitsgehalt von weniger als 20 Gew.-%, insbesondere weniger als 10 Gew.-% auf. Bei metallsalzgegerbten Ledern kann ein Feuchtigkeitsgehalt von bis zu 20 Gew.-% vorliegen, ohne daß eine Zerstörung der Lederstrucktur eintritt, während bei FOC-Ledern ein geringerer Feuchtigkeitsgehalt, weniger als 10 Gew.-% erforderlich ist.

Die Auswahl des thermoplastischen Polymeren ist an sich keinen Beschränkungen unterworfen. Bevorzugt ist, daß das thermoplastische Polymere ausgewählt ist aus der Gruppe, die gebildet wird von Polypropylen, Polyamiden, Polycarbonaten, Polybutylenterephthalaten, Acrylnitril/Butadien/Styrol-Polymeren und Acrylnitril/Styrol/Acrylester-Polymeren. Diese Kunststoffe sind beispielsweise im Automobilbau weit verbreitet, einfach zu verarbeiten und können nach Beendigung der Lebensdauer einfach thermisch verwertet werden. Die Verbindung zwischen der Lederschicht und Polypropylen bzw. Polyurethan als thermoplastischem Polymeren kann nicht mehr getrennt werden, ohne die Lederstruktur zu zerstören.

Als Werkzeuge können im erfindungsgemäßen Verfahren die in der Kunststofftechnik üblichen Apparaturen verwendet werden, beispielsweise Spritzgießwerkzeuge für das Spritzgießen. Wesentlich ist, daß jeweils auf der Lederseite des Formteils für eine ausreichende Wärmeabfuhr gesorgt werden kann.

Beim Spritzgießen wird die Lederschicht entweder direkt über ein Tiefzieh-Verfahren dreidimensional vorgeformt und anschliessend in einem Spritzgießwerkzeug mit dem thermoplastischen Polymeren, welches den Träger bildet, hinterspritzt oder das Leder in der Spritzgießform durch die einströmende Polymerschmelze direkt tiefgezogen.

Bei einer anderen Ausführungsform erfolgt das Verbinden von Träger und Leder durch Extrusion. Bevorzugt wird dabei das thermoplastische Polymer zunächst in einem Extruder auf eine Temperatur von wenigstens 100 °C erhitzt, dem thermoplastischen Polymer wird dann das Leder über temperierte Kalander- oder Prägewalzen zugeführt und auf diese Weise Träger und Leder miteinander verbunden. Das erwärmte thermoplastische Polymer wird dabei geeignet durch eine entsprechend geformte Breitbanddüse ausgestoßen. Das dreidimensionale Verformen das Komposits aus Leder und Träger kann innerhalb des Werkzeugs, d.h. der Kalander- oder Prägewalze, erfolgen. Dabei werden auf der Seite des Polymeren die Formteile auf die erforderlichen hohen Temperaturen erhitzt, während auf der Lederseite das Formteil gekühlt wird.

Die mit dem erfindungsgemässen Verfahren herstellbaren Formteile zeigen äußerst günstige Eigenschaften. Gegenstand der Erfindung ist daher auch ein dreidimensionales Formteil mit einem Träger aus einem thermoplastischen Polymeren und einer auf dem Träger angeordneten Schicht aus Leder. Das dreidimensionale Formteil ist dadurch gekennzeichnet, daß das Leder einseitig, vorzugsweise auf der Fleischseite, von dem thermoplastischen Polymeren des Trägers durchdrungen ist.

Durch das in die Lederschicht eingedrungene thermoplastische Polymere werden Lederschicht und Träger irreversibel miteinander verbunden. Ein Abtrennen der Lederschicht vom Träger ist bei den meisten gebräuchlichen Kunststoffen nur unter Zerstörung der Lederstruktur möglich. Bei dem erfindungsgemäßen dreidimensionalen Formteil ist für die Verbindung von Lederschicht und Träger kein weiteres Material als Klebstoff erforderlich. Charakteristisch für das erfindungsgemäße dreidimensionale Formteil ist also die Abwesenheit einer Klebstoffschicht zwischen Leder und Träger.

Für eine gute Verbindung zwischen Lederschicht und Träger hat sich als günstig erwiesen, daß die Eindringtiefe des thermoplastischen Polymeren in das Leder 5 bis 40%, vorzugsweise 10 bis 30% der Stärke der Lederschicht beträgt. Die erforderliche Eindringtiefe hängt ab von der Lederdicke sowie den Ansprüchen an die mechanische Widerstandsfähigkeit. Gebräuchliche Lederdicken liegen im Bereich von 1 bis 1,2 mm.

Die erfindungsgemäßen Formteile können in einer Vielzahl von Anwendungen eingesetzt werden. Neben dem bereits erwähnten Einsatz in der Automobilindustrie für die Verkleidung von Armaturenbrettern, für Innenverkleidungen, Mittelkonsolen usw. ist beispielsweise eine Ausgestaltung als Schutzhülle für Mobiltelefone, eine Ausrüstung von Schalenkoffern mit Lederoberflächen oder ein Einsatz in der Schuh- oder Bckleidungsindustrie für direkt angespritzte Kappen, Schulterstücke und Schutzkleidungseinzelteile denkbar. Ein weiteres Einsatzgebiet ist beispielsweise die Möbelindustrie. Hier ist ist eine Ausgestaltung des Formteils als Rückenlehne, Sitzfläche oder Armlehne von Sitzmöbeln denkbar. Die Erfindung ist weit über die genannten Einsatzbeispiele hinaus verwendbar.

Die Erfindung wird im weiteren anhand von Beispielen näher erläutert.

### Beispiel 1

In ein rechteckiges Lederstück (FOC-Leder (wet white) der Firma BASF, Artikel Nr. 11111) mit einer Kantenlänge von 15 x 30 cm und einer Stärke von 1,0 mm wurden kreisrunde Löcher mit einem Durchmesser von 10 mm eingestanzt. Das Lederstück wurde in der Weise in eine Spritzgießform eingelegt, daß die
Narbenseite an einer mit einem narbenartigen Relief versehenen Formfläche des Werkzeugs zur Anlage gelangte. Die Formfläche war auf eine Temperatur von 40 °C temperiert. Nach Schließen des Spritzwerkzeuges wurde ein mit 40 Gew.-% Talkum verstärktes Propylenhomopolymer mit einer Schmelzflußrate (MFR) nach ISO 1133, von 15 g/10 min, bei 230 °C und 2,16 kg, auf eine Temperatur von 250 °C erhitzt und unter einem Spritzdruck von 300 bar eingespritzt. Unter Aufrechterhaltung eines Nachdrucks von 300 bar wurde das Werkzeug innerhalb einer Zeitdauer von 1 min auf eine Temperatur von 30 °C abgekühlt. Dann wurde das Spritzgießwerkzeug geöffnet und das entstandene dreidimensionale Formstück entnommen.

Eine optische Überprüfung des Formteils ergab, daß bei einer Betrachtung senkrecht zur Oberfläche des Formteils der Übergang am Rand der eingestanzten Löcher nicht sichtbar war. Bei schräger Betrachtung und schrägem Lichteinfall kann das eingestanzte Loch in der Lederoberfläche als leichte Vertiefung wahrgenommen werden.

### Beispiel 2

Beispiel 1 wurde wiederholt, mit dem Unterschied, daß dem Propylenhomopolymer zusätzlich 0,5 Gew.-% Zitronensäure als endothermes Treibmittel beigemischt waren.

Eine optische Auswertung des erhaltenen Formstücks ergab, daß die ausgestanzten Löcher vollständig mit Polymerschaum ausgefüllt waren. Ein optischer Unterschied zwischen Polymermasse und Lederfläche ist nicht sichtbar. Auch bei schrägem Lichteinfall kann eine Vertiefung in der Lederoberfläche nicht festgestellt werden. Beim Betasten der Oberfläche ergibt sich ein typisches Ledergefühl. Ein Übergang zwischen Lederfläche und der in den Löchern ausgebildeten Polymerfläche lässt sich nicht ertasten.

Die Beständigkeit der mit den Beispielen 1 und 2 erhaltenen Proben 1 und 2 wurde in den folgenden Beispielen überprüft.

### Beispiel 3

Die Proben 1 und 2 wurden jeweils zwei Stunden vollständig in auf 20 °C temperiertes destilliertes Wasser eingetaucht. Die Proben wurden anschliessend aus dem Wasser herausgenommen, die Oberfläche mit saugfähigem Papier abgetrocknet und anschliessend die Proben 10 Stunden bei 60 °C in einem Trockenschrank getrocknet. Diese Behandlung wurde jeweils zweimal wiederholt. Die Proben wurden jeweils optisch auf Veränderungen untersucht. Beide Proben zeigen keine Veränderung der Lederoberfläche. Es sind keine Ablösungen zu beobachten. Eine Überprüfung auf Verzug wurde durch Einlegen der Probestücke in eine Schablone durchgeführt. Dabei konnte keine Veränderung der Gestalt der Probenkörper festgestellt werden.

### Beispiel 4

Nach den Beispielen 1 und 2 hergestellte Proben 1 und 2 wurden in einer Klimakammer vier Tage bei 10 °C und einer relativen Luftfeuchte von 98 % gelagert. Die Probenstücke wurden entnommen und in eine weitere Klimakammer überführt und dort weitere vier Tage bei 90 °C und einer relativen Luftfeuchte von 15 % gelagert. Die Proben wurden entnommen und optisch auf Veränderungen untersucht. Beide Proben zeigen keine Ablösung der Lederschicht. Eine Überprüfung der Probenkörper mit Hilfe einer Schablone ergab, daß dieser seine Form nicht verändert hatte.

### Beispiel 5

Die Probenkörper wurden jeweils eingespannt und anschliessend die Lederschicht mit einer senkrecht zur Lederfläche der Probe wirkenden Kraft abgezogen. Es wurde jeweils die Kraft bestimmt, bei der ein beginnendes Ablösen der Lederschicht festgestellt werden konnte.

Bei beiden Probenkörpern trat kein Lösen der Lederschicht von dem Träger aus Polypropylen auf. Bei einer Kraft von 20 N erfolgte ein Ablösen der Lederschicht unter Zerstörung der Lederstruktur.

### Beispiel 6

Es wurden dünne Längsschnitte durch die Proben angefertigt und unter dem Mikroskop vermessen. Die Eindringtiefe des Polymeren in die Lederschicht wurde zu 200 µm (20 %) bestimmt.

## Patentansprüche

1. Verfahren zur Herstellung eines dreidimensionalen Formteils mit einem Träger aus einem thermoplastischen Polymeren und einer auf dem Träger angeordneten Schicht aus Leder, wobei das Leder und das thermoplastische Polymere mit einem Werkzeug, das eine Formfläche aufweist, an der das Leder zur Anlage gelangt, bei einem Druck von mindestens 50 bar, vorzugsweise mehr als 100 bar, insbesondere mehr als 180 bar, und einer Temperatur von mehr als 100°C, vorzugsweise 180 bis 280°C, insbesondere 200 bis 250°C, durch Spritzgießen verbunden werden, wobei die am Leder anliegende Formfläche des Werkzeugs auf eine Temperatur von oberhalb 40 bis 80°C temperiert wird, **dadurch gekennzeichnet, daß** der Kunststoff durch mehrere, in Fließrichtung des Kunststoffs hintereinander angeordnete Düsen eingespritzt wird.

2. Verfahren nach Anspruch 1, **dadurch gekennzeichnet, dass** die am Leder anliegende Formfläche des Werkzeugs auf eine Temperatur von 50 bis 60°C temperiert wird.

3. Verfahren nach den Ansprüchen 1 oder 2, **dadurch gekennzeichnet, dass** man als Leder Vegetabilleder, Sämischleder oder FOC-Leder verwendet.

4. Verfahren nach einem der Ansprüche 1 bis 3, **dadurch gekennzeichnet, dass** man als Leder ein minderwertiges Leder verwendet.

5. Verfahren nach einem der Ansprüche 1 bis 4, **dadurch gekennzeichnet, dass** das Leder Löcher aufweist.

6. Verfahren nach einem der Ansprüche 1 bis 5, **dadurch gekennzeichnet, dass** die am Leder anliegende Pormfläche des Werkzeugs eine Prägestruktur aufweist.

7. Verfahren nach einem der Ansprüche 1 bis 6, **dadurch gekennzeichnet, dass** das thermoplastische Polymere aufgeschäumt wird, insbesondere bis zu einer Reduktion der spezifischen Dichte, bezogen auf das ungeschäumte thermoplastische Polymer, von 5 bis 40 %.

8. Verfahren nach einem der Ansprüche 1 bis 7, **dadurch gekennzeichnet, dass** das thermoplastische Polymere eingefärbt ist, vorzugsweise in seiner Färbung auf die Farbe des Leders abgestimmt ist.

9. Verfahren nach einem der Ansprüche 1 bis 8, **dadurch gekennzeichnet, dass** man die an den Träger gebundene Lederoberfläche mit einer Pigmentlackierung versieht.

10. Verfahren nach einem der Ansprüche 1 bis 9, **dadurch gekennzeichnet, dass** das Leder einen Feuchtigkeitsgehalt von weniger als 20 Gew.-%, vorzugsweise weniger als 10 Gew.-% aufweist.

11. Verfahren nach einem der Ansprüche 1 bis 10, **dadurch gekennzeichnet, dass** das thermoplastische Polymere ausgewählt ist aus der Gruppe, die gebildet ist von Polypropylen, Polyamiden, Polycarbonaten, Polybutylenterephthalaten, Acrylnitril/Butadien/Styrol-Polymeren und Acrylnitril/Styrol/Acrylester-Polymeren.

## Claims

1. A process for producing a three-dimensional molding with a support made from a thermoplastic polymer and with a leather layer arranged on the support, which comprises bonding the leather and the thermoplastic polymer by injection molding at a pressure of at least 50 bar, preferably more than 100 bar, in particular more than 180 bar, and at more than 100°C, preferably from 180 to 280°C, in particular from 200 to 250°C, using a mold which has a molding surface with which the leather comes into contact, where that molding surface of the mold which is in contact with the leather is temperature-controlled to a temperature of from above 40 to 80°C, which comprises injecting the plastic through two or more dies arranged in series in the direction of flow of the plastic.

2. A process as claimed in claim 1, wherein that molding surface of the mold which is in contact with the leather is temperature-controlled to a temperature of from 50 to 60°C.

3. A process as claimed in claim 1 or 2, wherein the leather used comprises vegetable leather, chamois leather, or FOC leather.

4. A process as claimed in any of claims 1 to 3, wherein the leather used comprises a low-value leather.

5. A process as claimed in any of claims 1 to 4, wherein the leather has holes.

6. A process as claimed in any of claims 1 to 5, wherein that molding surface of the mold which is in contact with the leather has an embossment structure.

7. A process as claimed in any of claims 1 to 6, wherein the thermoplastic polymer is foamed, in particular to give a reduction of from 5 to 40% in density, based on the unfoamed thermoplastic polymer.

8. A process as claimed in any of claims 1 to 7, wherein the thermoplastic polymer has been colored, preferably colored and matched to the color of the leather.

9. A process as claimed in any of claims 1 to 8, wherein that surface of the leather bonded to the support is provided with a pigment coating.

10. A process as claimed in any of claims 1 to 9, wherein the moisture content of the leather is less than 20% by weight, preferably less than 10% by weight.

11. A process as claimed in any of claims 1 to 10, wherein the thermoplastic polymer has been selected from the group consisting of polypropylene, polyamides, polycarbonates, polybutylene terephthalates, acrylonitrile-butadiene-styrene polymers, and acrylonitrile-styrene-acrylate polymers.

## Revendications

1. Procédé pour la fabrication d'une pièce moulée en trois dimensions présentant un support composé d'un polymère thermoplastique et une couche de cuir placée sur le support, dans lequel le cuir et le polymère thermoplastique sont liés l'un à l'autre au moyen d'un moulage par injection sous une pression d'au moins 50 bars, de préférence supérieure à 100 bars, en particulier supérieure à 180 bars, et à une température supérieure à 100°C, de préférence de 180°C à 280°C, en particulier de 200°C à 250°C, à l'aide d'un outil qui présente une surface profilée contre laquelle le cuir est placé, la surface profilée de l'outil collée contre le cuir étant chauffée à une température supérieure à 40°C et pouvant atteindre 80°C, **caractérisé en ce que** la matière plastique est injectée par plusieurs buses placées les unes derrière les autres dans la direction d'écoulement de la matière plastique.

2. Procédé selon la revendication 1, **caractérisé en ce que** la surface profilée de l'outil collée contre le cuir est chauffée à une température allant de 50°C à 60°C.

3. Procédé selon la revendication 1 ou 2, **caractérisé en ce que** l'on utilise, en tant que cuir, du cuir végétal, du chamois ou du cuir FOC.

4. Procédé selon l'une quelconque des revendications 1 à 3, **caractérisé en ce que** l'on utilise, en tant que cuir, un cuir de qualité inférieure.

5. Procédé selon l'une quelconque des revendications 1 à 4, **caractérisé en ce que** le cuir présente des trous.

6. Procédé selon l'une quelconque des revendications 1 à 5, **caractérisé en ce que** la surface profilée de l'outil collée contre le cuir présente une structure de gaufrage.

7. Procédé selon l'une quelconque des revendications 1 à 6, **caractérisé en ce que** l'on fait mousser le polymère thermoplastique, en particulier jusqu'à une réduction de la densité spécifique de 5% à 40%, par rapport au polymère thermoplastique que l'on n'a pas fait mousser.

8. Procédé selon l'une quelconque des revendications 1 à 7, **caractérisé en ce que** le polymère thermoplastique est coloré, de préférence, sa couleur est assortie à la couleur du cuir.

9. Procédé selon l'une quelconque des revendications 1 à 8, **caractérisé en ce que** l'on dépose une couche de vernis pigmenté sur la surface du cuir liée au support.

10. Procédé selon l'une quelconque des revendications 1 à 9, **caractérisé en ce que** le cuir présente une teneur en humidité inférieure à 20% en poids, de préférence inférieure à 10% en poids.

11. Procédé selon l'une quelconque des revendications 1 à 10, **caractérisé en ce que** le polymère thermoplastique est choisi dans le groupe formé par le polypropylène, les polyamides, les polycarbonates, les poly(téréphtalate de butylène), les polymères acrylonitrile/butadiène/styrène et les polymères acrylonitrile/styrène/ester acrylique.
